(19) Europäisches Patentamt
European Patent Office
Office européen des brevets

(11) **EP 2 034 439 A1**

(12) **EUROPEAN PATENT APPLICATION**

(43) Date of publication:
**11.03.2009 Bulletin 2009/11**

(51) Int Cl.:
*G06T 7/00* (2006.01)    *G06K 9/46* (2006.01)

(21) Application number: **07301350.0**

(22) Date of filing: **07.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Thomson Licensing
92100 Boulogne-Billancourt (FR)**

(72) Inventors:
• **Zhu, Li Hua (Eric)
100085, BEIJING (CN)**
• **Han, Bo
100871, BEIJING (CN)**
• **Yang, Libo
100083, BEIJING (CN)**

(74) Representative: **Huchet, Anne
46, Quai Alphonse Le Gallo
92100 Boulogne Billancourt (FR)**

(54) **Method for establishing the saliency map of an image**

(57)    The invention concerns a method for computing a saliency map for an image said method being implemented by a graphics Processor Unit.

Fig 2

**Description**

FIELD OF THE INVENTION

The invention concerns a method to calculate the saliency map of an image.

BACKGROUND OF THE INVENTION

Visual attention (VA) is an efficient mechanism which selects important visual information for further identification and understanding and filters out redundant parts. It greatly reduces the quantity of input data and gives our ability for rapid analysis and reaction to the complex environment. No doubt, such a mechanism is much superior to any available machine based methods. Therefore, some computational models have been proposed to mimic the biological behavior and the neuronal architecture. They are based on the concept of saliency maps. Due to the effectiveness of attention models, they have found a wide range of applications, including image/video representation and compression, information retrieval, realistic rendering, object detection, robotic control and video adaptation on small-display devices.

However, the preferred models show several disadvantages. First, intensive computations and high bandwidth requirements lead to low performance of generating saliency maps. Computations in such models are dominated by lots of per-pixel operations, across-scale interpolations and image convolutions; therefore, high computational complexity for imitating biological functions requires massively parallel implementations to obtain fast response. To make the attention model feasible and practical, some applications adopt much simplified version of the biological plausible model, such as giving spatial saliency using color histograms of images, computing contrasts in a small local window and ignoring analysis of orientations.

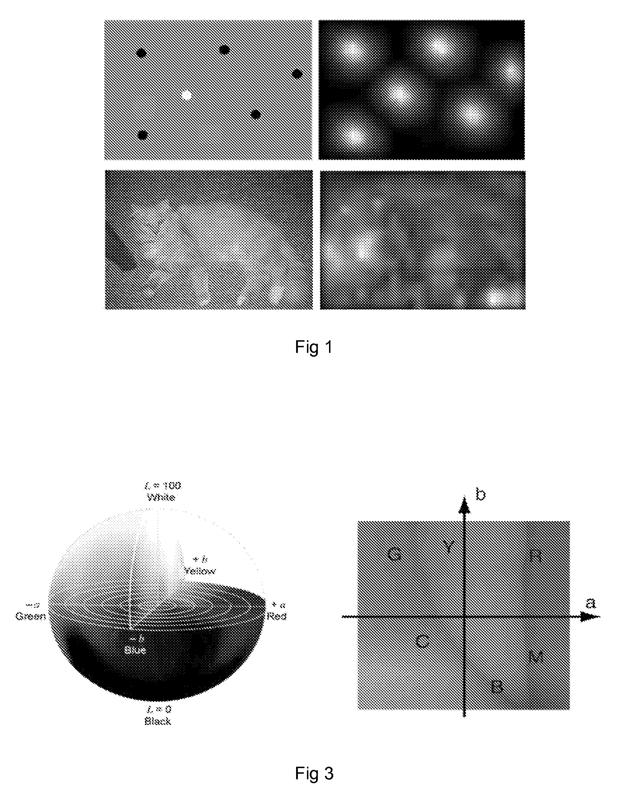

On the other hand, some models fail to output an accurate saliency map under some circumstances, that is, the true attention regions cannot be located in an image from the saliency map, as shown on Figure 1. This might be further explained by two reasons. First, the model ignores the separate responses from on-center and off-center cells in receptive field. These cells respond to light at the center excitably and inhibitably, respectively. The computations of on-center and off-center differences are combined by taking the absolute value of difference |*center - surround*|. This approach can lead to an incorrect intensity pop-out, as shown in the top of Fig.1. There is an image with a gray background and white/black dots on it, both having the same intensity contrast with the background. The on-center cells respond to the white dot, while the off-center cells to the black ones. The white one pops out in human perception, but the saliency map can not yield such pop-out effects since both the black and white dots have the same absolute contrast values.

This issue has been addressed by adding additional maps to handle on-center/off-center responses separately, which requires more computations and memory spaces.

In practice, the main challenge of the computational models comes from their high computational complexity.

The invention proposes to solve at least one of these drawbacks by using graphic processor units (GPUs) for computing the saliency maps, in order to accelerate the computation of the saliency maps.

SUMMARY OF THE INVENTION

To this end, the invention proposes a method for computing a saliency map for an image. According to the invention, the method is implemented by a graphics Processor Unit.

According to a preferred embodiment, the method comprises a step of calculating a set of feature maps for the intensity, the color and the orientation of the image, said feature maps being calculated in parallel using separate channels of a single Red Green Blue texture of said Graphic Processor Unit for the intensity and the color opponents and using one RGBA texture of said Graphics Processor Unit for the orientation.

According to a preferred embodiment the method comprises the step of pre-computing Gabor filters as Red Green Blue texture of said Graphics Processor Unit.

According to a preferred embodiment the method comprises a step of finding the maximum and minimum values of each feature map, said step being performed using the reduction function of the Graphics Processor Unit.

According to a preferred embodiment the method comprises a step of fusion of the set of feature maps, said fusion steps comprising the sub-steps of:

- summing the feature maps according to the following equation:

$$M_l = \bigoplus_{c,s} M_l(c,s); \quad O_\theta = \bigoplus_c M_\theta(c)$$

Where M represent the feature map,

$$l \in \{I, RG, BY\}; \; \theta \in \{0^{\circ}, 45^{\circ}, 90^{\circ}, 135^{\circ}\} \text{ and } c \in \{2, 3, 4\};$$

-    obtaining three conspicuity maps according to the following equation:

$$w(M) = I(M) \max_{M(i,j) \in M} \left| M(i,j) \right|$$

$$\tilde{I} = \sum_{\phi} w(M_{I\phi}) \left| M_{I\phi} \right|$$

$$\tilde{C} = \sum_{K} \sum_{\phi} w(M_{K\phi}) \left| M_{K\phi} \right|$$

$$\tilde{O} = \sum_{\theta} w(O_{\theta}) M_{\theta}$$

where

$$\phi \in \{+, -\}, \; K \in \{RG, BY\} \text{ and } \theta \in \{0^{\circ}, 45^{\circ}, 90^{\circ}, 135^{\circ}\},$$

-    obtaining the saliency map of the image by the following equation:

$$S = I(\tilde{I}) * \tilde{I} + I(\tilde{C}) * \tilde{C} + I(\tilde{O}) * \tilde{O}$$

where I() represents the information quantity of each feature map.

BRIEF DESCRIPTION OF THE DRAWINGS

Other characteristics and advantages of the invention will appear through the description of a non-limiting embodiment of the invention, which will be illustrated, with the help of the enclosed drawings:

-    Figure 1 represents the prior art results,
-    Figure 2 represents a preferred embodiment of the invention,
-    Figure 3 represents the CIE lab color space,
-    Figure 4 represents the implementation of the method with GPUs modules,
-    Figure 5 represents the reduction process.

DETAILED DESCRIPTION OF PREFERED EMBODIMENTS

The preferred embodiment on the invention is based on Itti's model described in the document L.Itti, C.Koch, and E. Niebur, "A model of saliency based visual attention for rapid scene analysis", IEEE Transactions on Pattern Analysis and Machine Intelligence, vol. 20, no. 11, pp. 1254-1259, Nov 1998 and in Simone Frintrop, "VOCUS: A Visual Attention System for Object Detection and Goal-Directed Search", vol. 3899 of Lecture Notes in Computer Science, Springer, 2006.

The image for which a saliency map has to be calculated is loaded by the Graphics Processor Unit (GPU) as a 2 dimensions RGB texture.

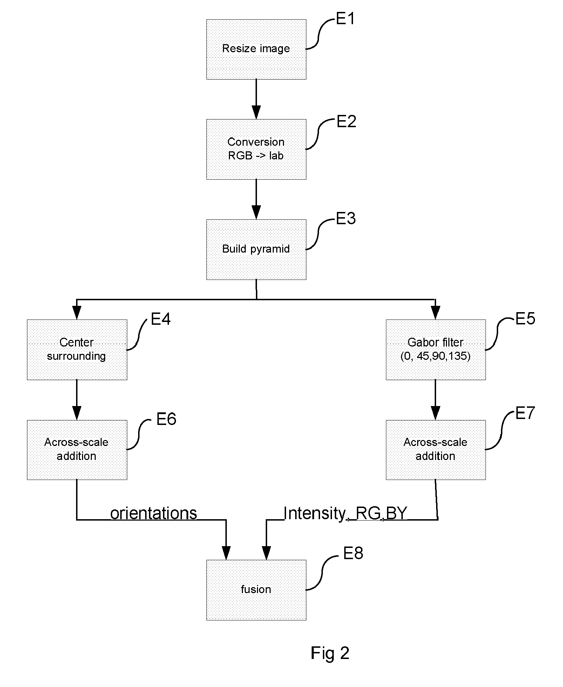

During a step E1 on figure 2 the input image which salience has to be calculated is resized with its aspect ratio unchanged by drawing a quad in a specific size, typical 640x480, which aims to reduce computations for large images and build a complete image pyramid.

In a step E2, a rendering pass is activated for color space conversion from *RGB* to *Lab*. The space is spanned by three axes, as shown in Fig.3: L represents luminance; a represents the color component between red and green; and b for the component between yellow and blue. These three values of each pixel are treated as approximations for the intensity I, red-green color opponent RG and blue-yellow opponent BY in the attention model.

The result is stored in a multi-channel texture of the GPU with the 16bit floating point format to ensure the precision.

The intensity and two color opponents are stored in the separate color channels of a single RGB texture, while the four orientation maps reside in one RGBA texture. In this way, all the channels in one texture can be processed in parallel and benefit from the GPU's vector operations. An RGBA texture means a texture format with four color channels: red, green, blue and alpha

During a step E3, the automatic Mipmap texture generation is further utilized to build the image pyramid $P_l(\sigma)$ where $l \in \{I,RG,BY\}$ and $\sigma \in \{0..8\}$, which is based on bilinear filtering. The Gaussian and other filters can also be utilized to build the pyramid by the ping-pong technique. In the preferred embodiment, the Mipmap method is used due to its simplicity. The level of the pyramid can be specified by setting the derivative parameters for Cg texture functions.

In a step E4, a simple fragment shader is performed to compute center-surrounding differences $\Theta$ which detects locations that locally stand out from their surroundings, and is implemented as the difference between fine and coarse scales. The operation is obtained by interpolation to the finer scale and point-by-point subtraction.

$$M_l(c,s) = P_l(c)\Theta P_l(s)$$

$$(1)$$

where $c \in \{2,3,4\}$; $s = c+\delta, \delta \in \{3,4\}$. The signed difference value to account for both on-center and off-center cells in receptive field is used. Then, six maps of each feature are yielded to analyze in a multi-scale manner. But each map has separate positive and negative ranges to represent the on/off center responses.

In a step E5, local information of orientations is obtained by applying Gabor filters to the levels of luminance pyramid $P_l$. Since the center-surround differences are already determined implicitly by the gabor filters, three levels $c \in \{2,3,4\}$ are chosen from the luminance pyramid $P_l$ to be convolved with four orientations filter $G(\theta)$; $\theta \in \{0°,45°,90°, 135°\}$. Totally twelve maps are generated for analysis of orientations. In this way, all the early visual features are obtained.

The Gabor filters are always computation intensive. The filter kernel size directly impacts the performance. Fortunately, four Gabor filter kernels are pre-computed and stored as a RGBA texture by the GPU. Filters with the size of 5x5 or 7x7 are practical for high speed implementation on the GPU.

During Steps E6 and E7, across-scale additions are performed and the blending function to accumulate all the differences is used.

Since different multi-scale feature maps have different visual modalities and dynamic ranges, it is always a difficult problem to combine them into a unique saliency map. Obviously, all the maps have un-equal influences. So it is necessary to determine their corresponding importance. In a step E8, a fusion of all the saliency map is performed.

Ideally, each feature map should be able to represent a sparse distribution of a few conspicuous locations over the visual field. These conspicuous spots are taken as informative events. According to Shannon's information theory, the information conveyed by an event x is inversely proportional to the likelihood of x being observed.

$$I(\mathrm{x}) = -\log(p(\mathrm{x}))$$

$$(2)$$

To get the probability $p(\mathrm{x})$, the pixels are counted with their values above a certain conspicuous threshold$^\tau$, for example 70% of the global maximum. The ratio with the number of total pixels in a feature map M yields the approximation of p(M). In this way, the information quantity I(M) reflects the importance of a corresponding feature map, shown as Equation 3. This information quantity I(M) is used to weight each map during a fusion step.

$$p(M) = \frac{C_{pass}(M(i,j) > \tau)}{C_{all}(M(i,j))};$$

$$I(M) = -\log(p(M)) \tag{3}$$

With $C_{pass}$ the number of pixels having a pixel value higher than the conspicuous threshold $\tau$ , and $C_{all}$ the total number of pixels in the image.

In our model, different fusion methods are given for different fusion actions. There are three fusion actions:

1) multi-scale maps of each feature, defined below in equation (4).
2) multiple features in the same modality, such as four orientations, positive and negative parts of the intensity and RG and BY of the color, defined below in equation (5).
3) across-modality fusion between intensity, color and orientation, defined below in equation (6).

Considering their same modality, six center-surrounding difference maps of each I, *RG, BY* are summed up directly by across-scale addition $\oplus$, same for the three multi-scale maps of each orientation.

$$M_I = \bigoplus_{c,s} M_I(c,s); \; O_\theta = \bigoplus_c M_\theta(c) \tag{4}$$

where $I \in \{I, RG, BY\}$; $\theta \in \{0°, 45°, 90°, 135°\}$ and $c \in \{2,3,4\}$. Then seven feature maps are obtained: one intensity (I), two colors (RG, BY) and four orientations (O). Actually, each of the intensity and color maps implicitly has two separate positive and negative maps, for the on-center and off-center responses. Afterwards, they are combined into three *conspicuity maps:* $\tilde{I}$ for intensity, $\tilde{C}$ for color and $\tilde{O}$ for orientation. Before that, a weight function of Equation (5) is given. The global maximum gives the amplitude while *I(M)* obtained by equation (3) represents the uniqueness of a map. Both of them are used to weight each sub-map. The positive and negative parts are considered separately. In this way, *conspicuity maps* are combined according to Eq.5, where $\phi \in \{+,-\}$, $K \in \{RG, BY\}$ and $\theta \in \{0°, 45°, 90°, 135°\}$. They are further normalized to [0,1] to eliminate modality differences.

$$w(M) = I(M) \max_{M(i,j) \in M} |M(i,j)|$$

$$\begin{aligned} \tilde{I} &= \sum_\phi w(M_{I\phi}) |M_{I\phi}| \\ \tilde{C} &= \sum_K \sum_\phi w(M_{K\phi}) |M_{K\phi}| \\ \tilde{O} &= \sum_\theta w(O_\theta) M_\theta \end{aligned} \tag{5}$$

Finally, each conspicuity map is weighted according to equation (5) and summed up to the global saliency map S. Since selecting focus of attentions by a WTA (standing for "winner-take-all") network is a sequent process, it is left to the CPU.

$$S = I(\tilde{I}) * \tilde{I} + I(\tilde{C}) * \tilde{C} + I(\tilde{O}) * \tilde{O} \tag{6}$$

Where I() represents the information quantity of each map and is defined in equation (3) above.

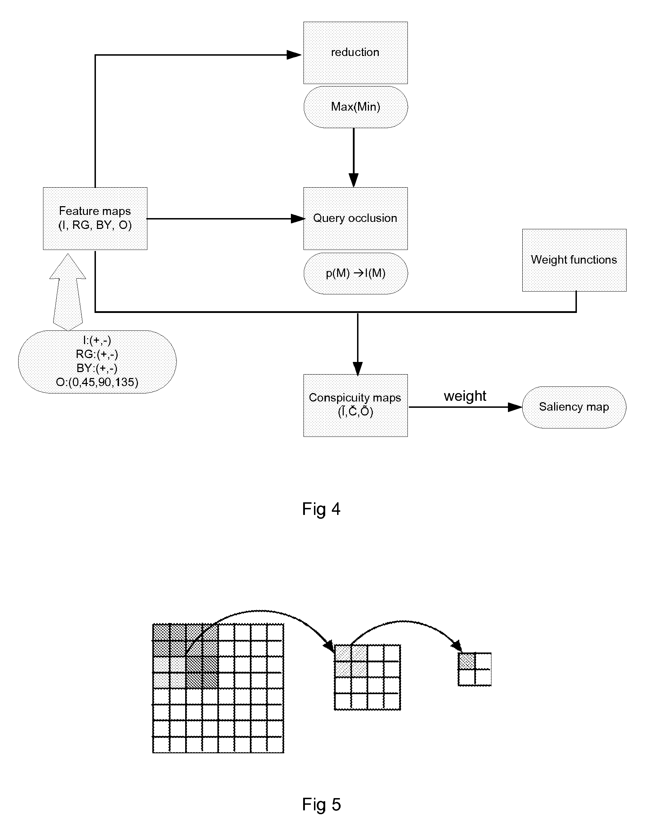

Figure 4 represents the implementation of the method according to the invention using some GPU features, such as query occlusion, reduction.

To some extend, the proposed fusion method acts as global nonlinear amplifications but it is more robust and avoids the time-consuming search for every local maxima. Especially, equation (3) is efficiently implemented by the occlusion query of current GPUs. Furthermore, by splitting the feature map into blocks and analyzing the local statistics, one obtains more accuracy and spatial-context adaptive results.

Finding the maximum and minimum values of each feature map (equation (5)) is called reduction when using GPU. On GPUs, reductions can be performed by the ping-pong techniques in *O(logn)* steps. For a two-dimensional reduction, the fragment program reads four elements from four quadrants of the input texture, and the output size is halved in both dimensions at each step, as shown in Figure 5. The maxima and minima correspond to the positive and negative parts, respectively.

The computation for equation (3) is implemented by the occlusion query. This hardware mechanism counts the number of pixels that finally pass through the rendering pipeline. Since the global maxima for each feature maps are obtained, shaders are designed to only allow pixels with their values above a threshold to pass through. By means of the queried number of passed pixels, the computation for *I(M)* equation (3) is done.

**Claims**

1. Method for computing a saliency map for an image **characterized in that** the method is implemented by a graphics Processor Unit.

2. Method according to claim 1 **characterized in that** it comprises a step of calculating a set of feature maps for the intensity, the color and the orientation of the image, said feature maps being calculated in parallel using separate channels of a single Red Green Blue texture of said Graphics Processor Unit for the intensity and the color opponents and using one RGBA texture of said Graphics Processor Unit for the orientation.

3. Method according to claim 2 **characterized in that** it comprises the step of pre-computing Gabor filters as Red Green Blue texture of said Graphics Processor Unit.

4. Method according to one of claims 2 or 3 **characterized in that** it comprises a step of finding the maximum and minimum values of each feature map, said step being performed using the reduction function of the Graphics Processor Unit.

5. Method according to claim 1 **characterized in that** it comprises a step of fusion of the set of feature maps, said fusion steps comprising the sub-steps of:

- summing the feature maps according to the following equation:

$$M_l = \bigoplus_{c,s} M_l(c,s); \ O_\theta = \bigoplus_c M_\theta(c)$$

Where M represent the feature map,

$$l \in \{I, RG, BY\}; \ \theta \in \{0^o, 45^o, 90^o, 135^o\} \text{ and } c \in \{2,3,4\};$$

- obtaining three conspicuity maps according to the following equation:

$$w(M) = I(M) \max_{M(i,j) \in M} |M(i,j)|$$

$$\tilde{I} = \sum_\phi w(M_{I\phi}) |M_{I\phi}|$$

$$\tilde{C} = \sum_K \sum_\phi w(M_{K\phi}) \left| M_{K\phi} \right|$$

$$\tilde{O} = \sum_\theta w(O_\theta) M_\theta$$

where $\phi \in \{+,-\}$, $K \in \{RG, BY\}$ and $\theta \in \{0°, 45°, 90°, 135°\}$,

- obtaining the saliency map of the image by the following equation:

$$S = I(\tilde{I}) * \tilde{I} + I(\tilde{C}) * \tilde{C} + I(\tilde{O}) * \tilde{O}$$

Where I() represents the information quantity of each feature map.

Fig 1

Fig 3

E1

Resize image

E2

Conversion
RGB -> lab

E3

Build pyramid

E4

Center
surrounding

E5

Gabor filter
(0, 45,90,135)

E6

Across-scale
addition

E7

Across-scale
addition

orientations

Intensity, RG,BY

E8

fusion

Fig 2

Fig 4

Fig 5

**European Patent Office**

**EUROPEAN SEARCH REPORT**

Application Number

EP 07 30 1350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LONGHURST PETER ET AL: "A GPU based saliency map for high-fidelity selective rendering" ACM INTERNATIONAL CONFERENCE ON COMPUTER GRAPHICS, VIRTUAL REALITY AND VISUALISATION IN AFRICA, AFRIGAPH '06, vol. 2006, 25 January 2006 (2006-01-25), pages 21-29, XP008091559 * the whole document * | 1-4 | INV. G06T7/00 G06K9/46 |
| D,A | ITTI L ET AL: "A MODEL OF SALIENCY-BASED VISUAL ATTENTION FOR RAPID SCENE ANALYSIS" IEEE TRANSACTIONS ON PATTERN ANALYSIS AND MACHINEINTELLIGENCE, IEEE SERVICE CENTER, LOS ALAMITOS, CA, US, vol. 20, no. 11, 1 November 1998 (1998-11-01), pages 1254-1259, XP001203933 ISSN: 0162-8828 * the whole document * | 1-5 | |

TECHNICAL FIELDS SEARCHED (IPC)

G06T

The present search report has been drawn up for all claims

| Place of search | Date of completion of the search | Examiner |
|---|---|---|
| Berlin | 16 May 2008 | Bouchaâla, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L.ITTI ; C.KOCH ; E. NIEBUR.** A model of saliency based visual attention for rapid scene analysis. *IEEE Transactions on Pattern Analysis and Machine Intelligence,* November 1998, vol. 20 (11), 1254-1259

- VOCUS: A Visual Attention System for Object Detection and Goal-Directed Search. **SIMONE FRINTROP.** Lecture Notes in Computer Science. Springer, 2006, vol. 3899